# EUROPÄISCHE PATENTSCHRIFT

(11) **EP 3 623 688 B1**
(45) Veröffentlichungstag und Bekanntmachung des Hinweises auf die Patenterteilung: **05.04.2023**
(21) Anmeldenummer: 19190348.3
(22) Anmeldetag: 06.08.2019
(51) Int. Cl.: F16P 3/08, B23Q 11/08, E06B 9/15

(54) **ABDECKVORRICHTUNG**
COVERING DEVICE
DISPOSITIF DE RECOUVREMENT

(30) Priorität: 07.09.2018 DE 102018121853
(43) Veröffentlichungstag der Anmeldung: 18.03.2020
(73) Patentinhaber: Thodacon Werkzeugmaschinenschutz GmbH, 83059 Kolbermoor (DE)
(72) Erfinder: VORPAHL, Vincent C., 85521 Ottobrunn (DE)
(74) Vertreter: Manitz Finsterwald Patent- und Rechtsanwaltspartnerschaft mbB

(56) Entgegenhaltungen:
- DE-U1-202015 105 216
- US-A1- 2015 300 084
- US-B2- 8 596 329

## Beschreibung

Die vorliegende Erfindung betrifft eine Abdeckvorrichtung für eine Maschine, insbesondere für eine Werkzeugmaschine.

Solche Abdeckvorrichtungen, welche auch als Rolltore, aufrollbare Schutzabdeckungen oder elektrisch angetriebene Rollos bezeichnet werden, dienen beispielsweise bei Werkzeugmaschinen dazu, in geschlossenem Zustand den Austritt von Spänen oder Kühlmittel aus der Maschine zu verhindern und gleichzeitig ein ungewolltes Hineingreifen von Bedienungspersonal in die Maschine zu unterbinden. Zum anderen kann durch ein Öffnen der Abdeckvorrichtung ein Innenraum der Maschine zugänglich gemacht werden, sodass Bedienungspersonal oder ein Roboter in den Maschineninnenraum hineingreifen kann, beispielsweise um ein Werkstück ein-, aus- oder umzuspannen.

Die Dokumente US 8,596,329 B2, DE 20 2015 105 216 U1 und US 2015/0300084 A1 beschreiben solche Abdeckvorrichtungen.

Um beispielsweise bei einem Schließen der Abdeckvorrichtung zu verhindern, dass ein Arm oder eine Hand des Bedienungspersonals eingeklemmt wird und/oder die Abdeckvorrichtung durch eine Kollision mit einem Werkstück beschädigt wird, kann ein Sensor detektieren, ob die Abdeckvorrichtung geschlossen werden darf. Falls die Abdeckvorrichtung nicht geschlossen werden sollte, kann ein Notstop ausgelöst werden, sodass keine Kollision der Abdeckvorrichtung mit einem sich in einer Schließebene befindlichen Objekt geschieht. Damit die Abdeckvorrichtung automatisch einen solchen Notstop auslösen kann, muss der Sensor mit einer Steuerungseinrichtung verbunden sein, welche einen Antriebsmotor der Abdeckvorrichtung steuert.

Alternativ oder zusätzlich können weitere elektrische Bauteile an einer Abdeckung der Abdeckvorrichtung vorgesehen sein, die ein Signal an eine zentrale Steuerungseinrichtung der Abdeckvorrichtung übermitteln oder mit Strom versorgt werden müssen. Beispielsweise kann an der Abdeckung ein Positionserkennungssensor vorgesehen sein, der die aktuelle Position der Abdeckung an die Steuerungseinrichtung der Abdeckvorrichtung sendet. Zudem kann eine Lampe an der Abdeckung angebracht sein, welche über ein Verbindungskabel mit Strom versorgt wird. Zudem kann auf der Abdeckung auch ein Schalter vorgesehen sein, welcher über ein Verbindungskabel mit der zentralen Steuerungseinrichtung verbunden ist.

Es ist eine Aufgabe der vorliegenden Erfindung, eine Abdeckvorrichtung bereitzustellen, welche es auf einfache, sichere und kostengünstige Art und Weise ermöglicht, ein an der Abdeckung angebrachtes elektrisches Bauteil mit einer außerhalb der Abdeckung angebrachten Steuerungseinrichtung oder Stromquelle zu verbinden.

Die Aufgabe wird gelöst durch eine Abdeckvorrichtung mit den Merkmalen des Anspruchs 1.

Die Abdeckvorrichtung weist eine, durch zumindest ein Abdeckelement gebildete, Abdeckung auf. Beispielsweise kann das Abdeckelement aus einem flexiblen Textil gebildet sein. Die Abdeckung kann aber auch mehrere Abdeckelemente umfassen. Diese können jeweils steif, jedoch beweglich miteinander verbunden sein.

Die Abdeckung kann zumindest ein Element aufweisen, welches in einem seitlichen Bereich des zumindest einen Abdeckelements angeordnet ist.

Zudem umfasst die Abdeckvorrichtung einen Antriebsmotor, der dazu ausgebildet und eingerichtet ist, die Abdeckung von einer Geschlossenstellung in eine Offenstellung in einer Bewegungsrichtung zu bewegen. Vorzugsweise kann der Antriebsmotor dazu ausgebildet und eingerichtet sein, die Abdeckung von einer Geschlossenstellung in eine Offenstellung aufzurollen und/oder von einer Offenstellung in eine Geschlossenstellung abzurollen. Unter dem Begriff "dazu ausgebildet und eingerichtet" ist zu verstehen, dass der Antriebsmotor die Eignung für den angegebenen Zweck aufweist und darüber hinaus auch für diesen Zweck eingesetzt wird. Beispielsweise kann der Antriebsmotor ausschließlich dazu ausgebildet und eingerichtet sein, die Abdeckung von einer Geschlossenstellung in eine Offenstellung zu bewegen. Eine Bewegung von einer Offenstellung in eine Geschlossenstellung könnte dann von einer anderen Einheit, beispielsweise einer Rückstellfeder oder einem zweiten Antriebsmotor übernommen werden. Andererseits ist auch denkbar, dass der Antriebsmotor ausschließlich dazu ausgebildet und eingerichtet ist, die Abdeckung von einer Offenstellung in eine Geschlossenstellung zu bewegen und eine Bewegung von der Geschlossenstellung in die Offenstellung von einer weiteren Einheit, z.B. einer Rückstellfeder oder einem zweiten Antriebsmotor, übernommen wird. Vorzugsweise ist der Antriebsmotor dazu ausgebildet und eingerichtet, die Abdeckung von einer Geschlossenstellung in eine Offenstellung aufzurollen und von einer Offenstellung in eine Geschlossenstellung abzurollen. Der Antriebsmotor kann in diesem Fall also in beide Drehrichtungen antreibbar sein, um die Abdeckung auf- und abzurollen.

Es ist zudem zumindest ein elektrisches Bauteil vorgesehen, welches an der Abdeckung angeordnet ist. Vorzugsweise ist das elektrische Bauteil als Sensor ausgebildet und in einem Endbereich der Abdeckung angeordnet. Der Endbereich kann in einem Bereich der Abdeckung liegen, welcher bei einem Schließen der Abdeckung gegen einen Endanschlag läuft.

Erfindungsgemäß ist eine sich parallel zur Bewegungsrichtung der Abdeckung erstreckende Aufnahme in dem zumindest einen Element oder in dem zumindest einen Abdeckelement ausgebildet. Es ist also eine Aufnahme vorgesehen, die sich zumindest abschnittsweise parallel zur Bewegungsrichtung der Abdeckung erstreckt. In der Aufnahme verläuft ein Verbindungskabel, welches das elektrische Bauteil mittelbar oder unmittelbar mit einer Steuerungseinrichtung oder einer Stromquelle verbindet.

Die Erfindung beruht somit auf der allgemeinen Idee, ein Verbindungskabel zwischen einem an der Abdeckung angebrachten elektrischen Bauteil und einer Steuerungseinrichtung oder einer Stromquelle beispielsweise nicht in einem Kabelschlepp zu führen, sondern das Kabel direkt in der Abdeckung, d.h. in dem zumindest einen Abdeckelement oder in dem zumindest einen mit dem Abdeckelement verbundenen Element zu führen. Im Vergleich zu der Variante mit Kabelschlepp ist die erfindungsgemäße Lösung kostengünstiger und gleichzeitig platzsparender.

Vorteilhafte Ausbildungen der Erfindung sind den Unteransprüchen, der Beschreibung und den Zeichnungen zu entnehmen.

Der Abdeckung kann zumindest ein Element, insbesondere ein Führungselement, aufweisen, welches in einem seitlichen Bereich des zumindest einen Abdeckelements angeordnet ist. Vorzugsweise ist die sich parallel zur Bewegungsrichtung erstreckende Aufnahme in dem zumindest einen Element oder Führungselement ausgebildet.

Vorteilhafterweise ist in jedem der beiden seitlichen Bereiche der Abdeckung zumindest ein Führungselement vorgesehen. Das Führungselement oder die Führungselemente können einstückig mit dem Abdeckelement ausgebildet sein. Alternativ dazu kann das zumindest eine Führungselement als separates Teil ausgebildet sein. Dieses zumindest eine Führungselement weist vorteilhafterweise einen verringerten Reibungskoeffizienten auf Stahl im Vergleich zu dem oder den Abdeckelementen auf. Zudem ist es vorteilhaft, wenn das Führungselement oder die Führungselemente weitestgehend verschleißfest ausgebildet sind, da die Führungselemente in aller Regel durch Reibung mechanisch beansprucht werden.

Die Abdeckvorrichtung kann zumindest eine Führungsschiene umfassen, welche mit dem zumindest einen Führungselement zusammenwirkt, um das zumindest eine Abdeckelement in einer vordefinierten Bahn zu führen. In diesem Fall kann sich die Aufnahme parallel zu der Führungsschiene erstrecken.

Gemäß einem Aspekt ist das elektrische Bauteil oder zumindest eines der elektrischen Bauteile als Sensor ausgebildet. Der Sensor kann beispielsweise als Kollisionserkennungssensor ausgebildet sein. Der Sensor detektiert somit, ob die Abdeckung mit einem Objekt kollidiert oder kollidieren wird. Vorzugsweise ist der Kollisionserkennungssensor als Berührungssensor ausgebildet. Alternativ dazu kann der Kollisionserkennungssensor als berührungsloser Sensor ausgebildet sein. Prinzipiell kommen beispielsweise ein kapazitiver Sensor, ein Ultraschallsensor, ein Kraftsensor oder eine Lichtschranke in Frage. Gemäß einer vorteilhaften Ausführungsform weist der Kollisionserkennungssensor eine Lichtschranke auf, die durch ein, in dem Endbereich der Abdeckung angeordnetes, hohles, elastisches Anschlagelement hindurchstrahlt. Wenn der Endbereich der Abdeckung mit einem Objekt kollidiert, verformt sich das hohle, elastische Anschlagelement und die Lichtschranke wird unterbrochen. So kann auf einfache und zuverlässige Weise eine Kollision der Abdeckung mit einem Objekt erkannt werden. Vorzugsweise erstreckt sich das elastische Anschlagelement über im Wesentlichen die gesamte Breite der Abdeckung, d.h. von einem seitlichen Endbereich zu dem anderen seitlichen Endbereich.

Es können alternativ oder zusätzlich auch andere elektrische Bauteile an der Abdeckung angebracht sein. Beispielsweise kann ein Positionsermittlungssensor vorgesehen sein, über den die Position der Abdeckung ermittelbar ist. Zudem kann eine elektrische Lichtquelle, beispielsweise eine LED, an der Abdeckung angebracht sein. Ein weiteres Beispiel für ein elektrisches Bauteil ist eine Eingabevorrichtung, wie z.B. ein Schalter. Es wäre auch denkbar, einen Lautsprecher an der Abdeckung vorzusehen. Jedes dieser elektrischen Bauteile kann über das Verbindungskabel, welches in der Aufnahme verläuft, mit einer Steuerungseinrichtung und/oder einer Stromquelle verbunden sein.

Vorzugsweise ist die Aussparung dermaßen angeordnet, dass das Verbindungskabel in Richtung der Dicke der Abdeckung gesehen mittig in der Abdeckung liegt. Das Verbindungskabel liegt somit in der neutralen Phase der Abdeckung und wird daher falls die Abdeckung aufgerollt wird nur minimal gestaucht bzw. gedehnt.

Gemäß einem weiteren Aspekt weist die Abdeckung mehrere verschwenkbar miteinander verbundene Abdeckelemente auf. Die Abdeckelemente sind vorzugsweise so miteinander verbunden, dass die Abdeckelemente und mögliche Verbindungselemente zusammen eine geschlossene Fläche bilden. Hierbei ist vorteilhaft, wenn die Abdeckelemente eine schmale längliche Form aufweisen und an ihren langen Seiten miteinander verbunden sind. Solche Abdeckungen werden auch Gliederschürzen genannt. Die Abdeckelemente können als Hohlprofile ausgebildet sein. Hierdurch wird die spezifische Steifigkeit der Abdeckelemente verbessert, und somit eine verhältnismäßig leichte, aber steife Abdeckung ermöglicht.

Gemäß einem Aspekt sind die Abdeckelemente aus einem Material hergestellt, welches Aluminium, Kunststoff und/oder Stahl umfasst. Beispielsweise können für die Abdeckelemente Aluminiumstrangpressprofile verwendet werden. Alternativ dazu können die Abdeckelemente aus Kunststoffprofilen hergestellt sein.

Gemäß einem weiteren Aspekt sind mehrere Führungselemente vorgesehen, welche jeweils stirnseitig auf eines der Abdeckelemente aufgesteckt sind. Gemäß diesem Aspekt können die Führungselemente so ausgebildet sein, dass sie teilweise in die als Hohlprofile ausgebildeten Abdeckelemente einsteckbar sind. Andererseits wäre auch denkbar, an den Führungselementen zwei oder mehr Stifte auszubilden, die in stirnseitige Öffnungen der Abdeckelemente eingreifen.

Alternativ dazu können mehrere Führungselemente vorgesehen sein, welche jeweils stirnseitig an einem einzigen flexiblen Abdeckelement, beispielsweise aus Textil, angebracht sein können.

Gemäß einem Aspekt weisen mehrere der Führungselemente jeweils eine Aussparung auf, sodass die Aussparungen gemeinsam die sich parallel zur Bewegungsrichtung der Abdeckung erstreckende Aufnahme bilden. Die Aussparungen der Führungselemente sind vorzugsweise fluchtend zueinander angeordnet. Die mehreren Führungselemente bilden somit gemeinsam eine Aussparung für das Verbindungskabel.

Um Führungselemente, die beispielsweise auf Grund von Verschleiß ausgetauscht werden müssen, auf einfache Weise ersetzen zu können, sind die Führungselemente vorzugsweise lösbar an den Abdeckelementen befestigt. Beispielsweise kann ein Schnappverschluss vorgesehen sein, um die Führungselemente sicher an den Abdeckelementen zu befestigen. Alternativ können die Führungselemente durch Reibung in oder an den Abdeckelementen gehalten sein.

Alternativ dazu können die Führungselemente fest, d.h. nicht lösbar, an den Abdeckelementen befestigt sein. Beispielsweise können die Führungselemente an die Abdeckelemente angeklebt oder angeschweißt sein.

Gemäß einem Aspekt ist die Aufnahme für das Verbindungskabel als umfangsseitig geschlossener Kanal oder als Durchgangsöffnung ausgebildet. Dies hat den Vorteil, dass das Verbindungskabel zumindest abschnittsweise von allen Seiten durch das Abdeckelement oder das Führungselement geschützt wird.

Alternativ dazu kann die Aufnahme als Nut ausgebildet sein. Dies erleichtert ein Einführen des Verbindungskabels in die Aussparung. Die Nut kann vorzugsweise eine Hinterschneidung aufweisen. Die Hinterschneidung kann an den Durchmesser des Verbindungskabels dermaßen angepasst sein, dass das Verbindungskabel formschlüssig in der Nut gehalten wird, sich aber durch elastische Verformung quer zur Haupterstreckungsrichtung der Nut aus der Nut herausziehen lässt.

Um das Verbindungskabel zusätzlich ölbeständig auszugestalten, kann das Verbindungskabel eine Ummantelung aus Acrylnitril-Butadien-Kautschuk (NBR), Polyurethan (PU) oder Flourkautschuk (FKM) aufweisen.

Damit das Verbindungskabel knickfest ausgebildet ist, weist das Verbindungskabei vorzugsweise einen Durchmesser von mindestens 4 mm auf. Beispielsweise kann das Verbindungskabel einen Durchmesser von 4.2 mm aufweisen.

Gemäß einem weiteren Aspekt kann eine Rolle vorgesehen sein, die dazu ausgebildet und eingerichtet ist, um die Abdeckung auf die Rolle aufzurollen. Vorzugsweise ist die Rolle hohl ausgebildet und ein Teilabschnitt des Verbindungskabels durch die Rolle hindurchgeführt. Hierdurch kann sich das Kabel in dem durch die Rolle geführten Bereich verdrehen während die Abdeckung aufgerollt wird. So wird auf einfache Weise das Problem gelöst, dass das Kabel einerseits an der sich aufrollenden Abdeckung befestigt ist und andererseits an einer sich nicht mitdrehenden Einheit, beispielsweise der Steuerungseinheit des Antriebsmotors, befestigt ist.

Eine alternative Lösung, um das Verbindungskabel vor einer übermäßigen mechanischen Belastung durch ein Aufrollen der Abdeckung zu schützen, besteht darin, einen Rotationskontakt, beispielsweise einen Schleifkontakt, zwischen einem Verbindungskabelabschnitt an der Abdeckung und einem Verbindungskabelabschnitt, welcher nicht an der Abdeckung befestigt ist und somit nicht mit aufgerollt wird, vorzusehen. In anderen Worten kann das elektrische Bauteil über einen Schleifkontakt, insbesondere Rotationskontakt, mit der Steuerungseinrichtung, dem Antriebsmotor oder der Stromquelle verbunden sein.

Die Anmeldung betrifft zudem eine Gliederschürze mit mehreren mittelbar oder unmittelbar miteinander verbundenen Abdeckelementen, die um eine Schwenkachse zueinander schwenkbar angeordnet sind, um aufrollbar zu sein. Dabei weisen entweder die Abdeckelemente selbst oder an den Abdeckelementen angebrachte Führungselemente eine sich quer, insbesondere senkrecht, zu der Schwenkachse erstreckende Aufnahme für ein Verbindungskabel auf. Die Gliederschürze kann für eine zuvor beschriebene Abdeckvorrichtung ausgebildet sein und/oder eines oder mehrere der zuvor oder nachfolgend in Bezug auf die Abdeckung beschriebenen Merkmale aufweisen. Die Abdeckung bzw. Gliederschürze kann darüber hinaus für weitere Anwendungen verwendet werden, beispielsweise bei Garagentoren, bei Möbeln, bei Fahrzeugen, etc.

Als Gliederschürze werden allgemein mehrere in sich steife Glieder angesehen, welche zueinander schwenkbar sind, damit die Gliederschürze aufrollbar ist.

Gemäß einer vorteilhaften Ausführungsform erstreckt sich in der Aufnahme ein Verbindungskabel. Vorteilhafterweise verläuft die Aufnahme für das Verbindungskabel entlang der gesamten sich senkrecht zu der Haupterstreckungsrichtung der Glieder erstreckenden Länge der Gliederschürze. Damit das Verbindungskabel möglichst platzsparend in der Gliederschürze verstaut werden kann, ist die Aufnahme vorzugsweise als Aussparung ausgebildet.

Die Erfindung wird im Folgenden beispielhaft unter Bezugnahme auf die Zeichnungen beschrieben. In den Zeichnungen sind gleiche oder ähnliche Elemente mit gleichen Bezugszeichen versehen. Es zeigen:
- Fig. 1: eine perspektivische Ansicht einer Abdeckvorrichtung gemäß einer ersten erfindungsgemäßen Ausführungsform;
- Fig. 2: eine perspektivische Detailansicht der Abdeckvorrichtung aus Fig. 1;
- Fig. 3A: eine perspektivische Ansicht einer Abdeckung gemäß einer erfindungsgemäßen Ausführungsform;
- Fig. 3B: ein Führungselement der Abdeckung aus Fig. 3A;
- Fig. 4A: eine perspektivische Ansicht einer Abdeckung gemäß einer weiteren erfindungsgemäßen Ausführungsform;
- Fig. 4B: ein Führungselement der Abdeckung aus Fig. 4A;
- Fig. 5A: eine Querschnittsansicht mehrerer verbundener Abdeckelemente gemäß einer ersten Ausführungsform;
- Fig. 5B: eine Querschnittsansicht mehrerer verbundener Abdeckelemente gemäß einer zweiten Ausführungsform;
- Fig. 5C: eine Querschnittsansicht mehrerer verbundener Abdeckelemente gemäß einer dritten Ausführungsform;
- Fig. 5D: eine Querschnittsansicht mehrerer verbundener Abdeckelemente gemäß einer vierten Ausführungsform; und
- Fig. 6: eine Detailansicht eines Endbereichs einer Abdeckvorrichtung; und
- Fig. 7: eine Detailansicht zur Kabelführung im Endbereich der Abdeckvorrichtung.

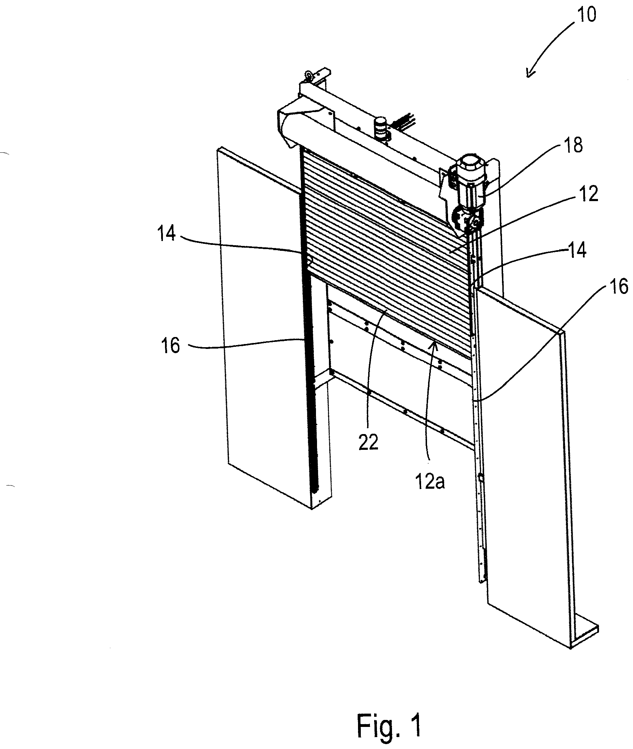

In Fig. 1 ist eine Abdeckvorrichtung 10 gezeigt, die beispielsweise für Werkzeugmaschinen, im Maschinen- und Anlagenbau oder im Bereich der Automatisierungstechnik verwendet werden kann.

Die Abdeckvorrichtung 10 umfasst eine Abdeckung 12, welche zum Öffnen der Abdeckvorrichtung 10 aufgerollt wird und zum Schließen der Abdeckvorrichtung 10 wieder abgerollt wird. Die Abdeckung 12 weist seitliche Führungselemente 14 auf, welche jeweils gleitend in Führungsschienen 16 geführt sind. Im vorliegenden Fall erstrecken sich die Führungsschienen 16 parallel zueinander in vertikaler Richtung. Alternativ dazu können die Führungsschienen in horizontaler Richtung angeordnet sein. Die Führungsschienen können auch gekrümmt sein und beispielsweise einen horizontal und einen vertikal verlaufenden Abschnitt aufweisen.

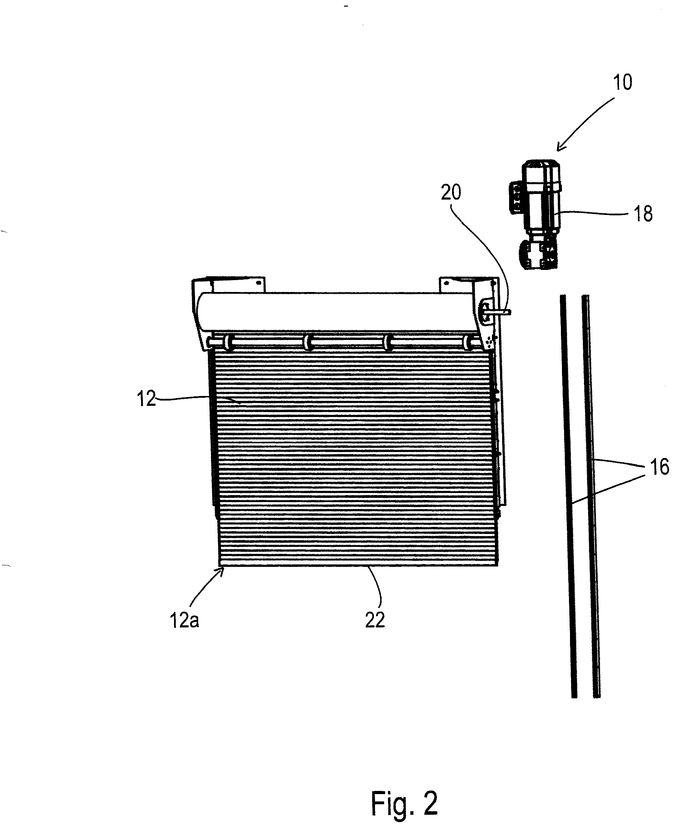

Um die Abdeckvorrichtung 10 auf- und abzurollen, ist ein Antriebsmotor 18 vorgesehen, der - wie in Fig. 2 zu sehen ist - drehfest mit einer Antriebswelle 20 verbunden ist. Die Antriebswelle 20 ist drehfest mit einer nicht gezeigten Hohlwelle verbunden, auf welche die Abdeckung 12 aufgerollt wird. Der Antriebsmotor 18 ist als Motor-Getriebe-Einheit ausgebildet und wird über eine integrierte Steuerungseinrichtung gesteuert. In einem unteren Endbereich 12a der Abdeckung 12 ist ein Sensor 22 angeordnet, der als Kollisionserkennungssensor ausgebildet ist. Um ein, von dem Sensor 22 bereitgestelltes, Signal an den Antriebsmotor 18 zu übertragen, ist ein in den Fig. 1 und 2 nicht gezeigtes Verbindungskabel vorgesehen.

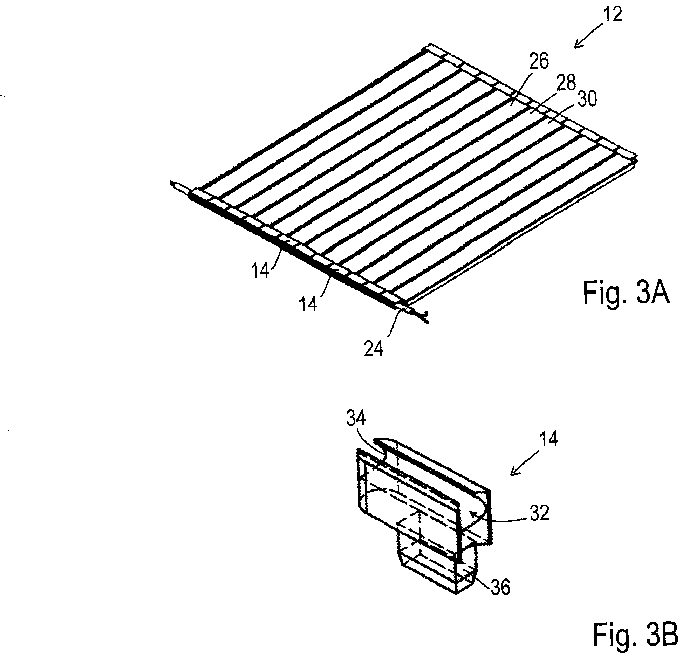

In den Fig. 3A und 3B ist eine erste Ausführungsform gezeigt, wie das Verbindungskabel 24 von dem Sensor 22 zu dem Antriebsmotor 18 geführt werden kann. Die Abdeckung 12 ist hierbei aus einer Vielzahl von Abdeckelementen 26, 28, 30 gebildet. Die Abdeckelemente 26, 28, 30 sind zueinander identisch und bilden gemeinsam eine Gliederschürze. Stirnseitig ist jeweils ein Führungselement 14 pro Seite auf jedes der Abdeckelemente 26, 28, 30 aufgesteckt. In den Führungselementen 14 ist eine nach außen offene Nut 32 (Fig. 3B) eingeformt, welche eine Hinterschneidung 34 aufweist und zur Aufnahme des Verbindungskabels 24 geeignet ist. Die Hinterschneidung 34 ist dermaßen dimensioniert, dass das Verbindungskabel 24 von außen in die Nut 32 eingedrückt werden kann, aber in der Nut 32 gehalten wird.

Jedes der Führungselemente 14 weist zudem einen Einsteckabschnitt 36 auf, welcher im vorliegenden Beispiel einen rechtwinkligen Querschnitt aufweist. Es versteht sich, dass der Einsteckabschnitt 36 einen anderen Querschnitt aufweisen kann. Der Querschnitt sollte lediglich passend zu einer nicht gezeigten stirnseitigen Öffnung des jeweiligen Abdeckelements 26, 28, 30 gewählt sein und das Führungselement 14 drehfest mit dem Abdeckelement 26, 28, 30 verbinden. Wie in Fig. 3A zu sehen ist, bilden die Nuten 32 der mehreren Führungselemente 14 eine Aufnahme für das Verbindungskabel 24 in Richtung der Bewegungsrichtung der Abdeckung 12, d.h. parallel zu den Führungsschienen 16. Hierdurch ist das Verbindungskabel 24 platzsparend und geschützt zwischen dem Sensor 22 und dem Antriebsmotor 18 verlegt und es wird kein Kabelschlepp benötigt.

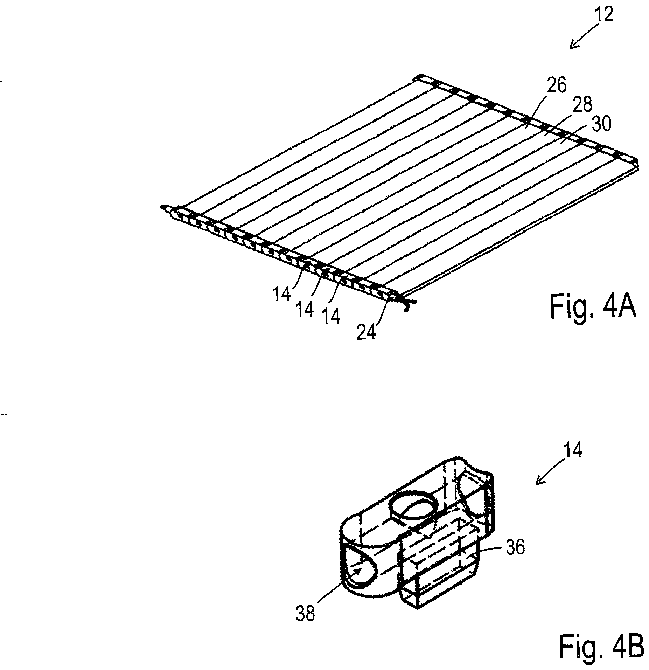

In den Fig. 4A und 4B ist eine zweite Ausführungsform gezeigt, wie das Verbindungskabel 24 von dem Sensor 22 zu dem Antriebsmotor 18 geführt werden kann. Bei dieser Ausführungsform ist als Aussparung in dem Führungselement 14 eine Durchgangsöffnung 38 vorgesehen, welche sich in Richtung der Bewegungsrichtung der Abdeckung 12 und somit in eingebautem Zustand parallel zu den Führungsschienen 16 erstreckt. Das Verbindungskabel 24 wird stirnseitig in die Durchgangsöffnungen 38 der Führungselemente 14 eingeführt bis es auf der gegenüberliegenden Stirnseite wieder zum Vorschein kommt. Zudem werden die einzelnen Führungselemente 14, wie bereits beschrieben, mit ihren Einsteckabschnitten 36 auf die Abdeckelemente 26, 28, 30 stirnseitig aufgesteckt. Auch bei dieser Ausführungsform bilden die Durchgangsöffnungen 38 der Führungselemente 14 - wie in Fig. 4A zu sehen ist - gemeinsam eine Aufnahme für das Verbindungskabel 24.

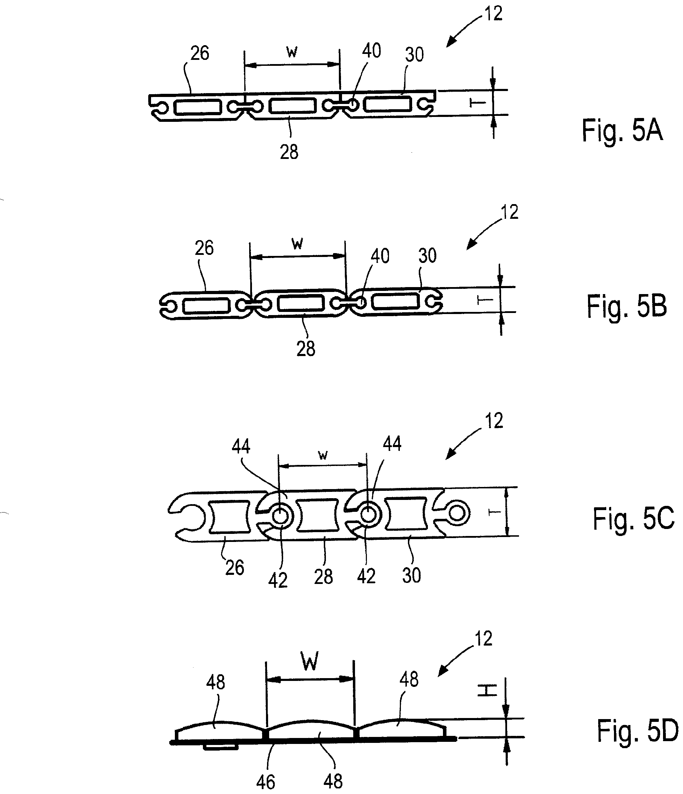

Die Abdeckelemente 26, 28, 30 können als Hohlprofile ausgebildet sein. In den Fig. 5A bis 5C sind verschiedene Möglichkeiten gezeigt, wie die Abdeckelemente 26, 28, 30 ausgebildet sein können und wie diese schwenkbar miteinander verbunden werden können. In den Fig. 5A und 5B ist hierzu ein separates Verbindungselement 40 vorgesehen, welches im Wesentlichen einen knochenförmigen Querschnitt aufweist. In Fig. 5C sind Abdeckelemente 26, 28, 30 gezeigt, die direkt schwenkbar miteinander verbunden werden können. Hierzu weist eine Seite des Abdeckelements 26, 28, 30 einen konvexen Abschnitt 42 auf, der von einemkorrespondierend ausgebildeten konkaven Abschnitt 44 des nächsten Abdeckelements 26, 28, 30 umgriffen wird. Der konvexe Abschnitt 42 und der konkave Abschnitt 44 bilden gemeinsam ein Gelenk, welches ein einseitiges Verschwenken der Abdeckelemente 26, 28, 30 zueinander zum Aufrollen der mehreren verbundenen Abdeckelemente 26, 28, 30 erlaubt. Auch bei der in Fig. 5A gezeigten Version ist ein Verschwenken der Abdeckelemente 26, 28, 30 zueinander zum Aufrollen der mehreren Abdeckelemente nur in einer Richtung möglich.

In Fig. 5D ist eine Abdeckung 12 gezeigt, welche ein Textil 46 umfasst, auf welchem Profilkörper 48, beispielsweise aus Metall oder Kunststoff, aufgebracht sind. Bei dieser Variante kann sich eine Nut durch die Profilkörper 48 erstrecken, welche parallel zur Bewegungsrichtung der Abdeckung 12 verläuft und welche eine Aufnahme für das Verbindungskabel 24 bildet.

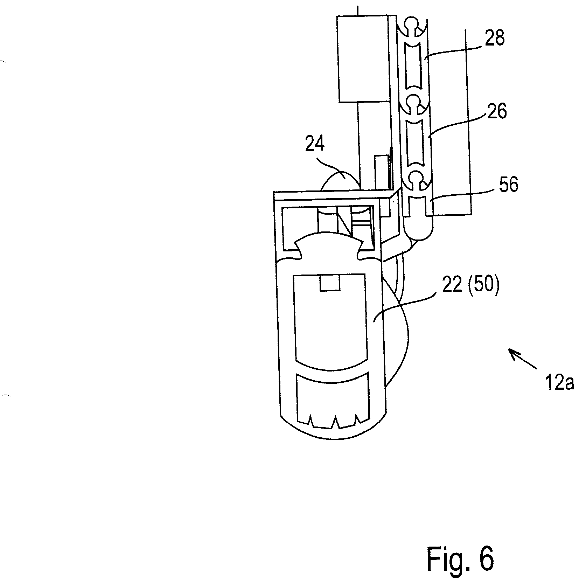

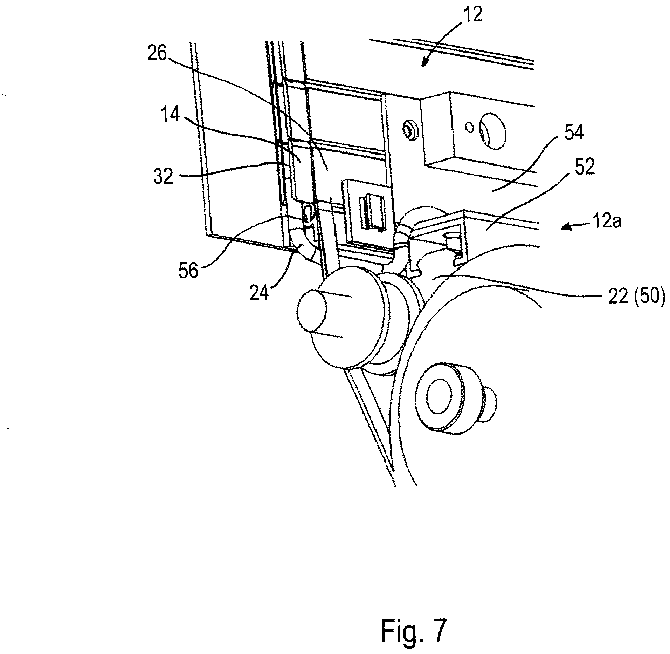

Die Figuren 6 und 7 zeigen jeweils einen Endbereich 12a einer Abdeckvorrichtung 10. In dem Endbereich 12a ist ein Sensor 22 in Form eines Kollisionserkennungssensors gezeigt. Der Sensor 22 umfasst ein hohles eleastisches Anschlagelement 50, in dem eine nicht gezeigte Lichtschranke angeordnet ist, welche entlang eines, durch das Anschlagelement 50 gebildeten, Hohlraums strahlt. Kollidiert das hohle elastische Anschlagelement 50 mit einem Objekt, beispielsweise einem Arm des Bedienungspersonals oder eines Roboters, so wird das hohle elastische Anschlagelement 50 verformt. Hierdurch verringert sich der Hohlraum und die Lichtschranke wird unterbrochen. Ein dadurch erzeugtes Signal kann dann über das Verbindungskabel 24 zu einer Steuerungseinrichtung übertragen werden, sodass die Steuerungseinrichtung einen Notstop des Antriebsmotors 18 auslösen kann.

In Fig. 7 ist gezeigt, wie das Verbindungskabel 24 von dem Sensor 22 zu einer durch die Führungselemente 14 gebildeten Aufnahme in Form einer Nut 32 geführt ist. Das Verbindungskabel 24 wird vom Sensor 22 kommend zunächst durch eine Öffnung einer mit dem hohlen elastischen Anschlagelement 50 verbundenen Befestigungsleiste 52 geführt. Zudem wird das Verbindungskabel 24 durch eine Öffnung eines Winkelprofils 54 geführt, welches die Befestigungsleiste 52 mit der Abdeckung 12 verbindet. Anschließend wird das Verbindungskabel 24 unterhalb eines die Abdeckung 12 abschließenden Abdeckelements 56 nach außen geführt. Das Verbindungskabel 24 wird um einen Eckbereich des abschließenden Abdeckelements 56 herum geführt und in die Aufnahme 32 des letzten Führungselements 14 eingeführt. Im vorliegenden Beispiel ist das letzte Führungselement 14 an einem mit dem abschließenden Abdeckelement 56 verbundenen Abdeckelement 26 angebracht und folglich an dem abschließenden Abdeckelement 56 kein Führungselement 14 angebracht.

### Bezugszeichenliste

- 10: Abdeckvorrichtung
- 12: Abdeckung
- 12a: Endbereich
- 14: Führungselement
- 16: Führungsschiene
- 18: Antriebsmotor
- 20: Antriebswelle
- 22: Sensor
- 24: Verbindungskabel
- 26: Abdeckelement
- 28: Abdeckelement
- 30: Abdeckelement
- 32: Nut
- 34: Hinterschneidung
- 36: Einsteckabschnitt
- 38: Durchgangsöffnung
- 40: Verbindungselement
- 42: konvexer Abschnitt
- 44: konkaver Abschnitt
- 46: Textil
- 48: Profilkörper
- 50: Anschlagelement
- 52: Befestigungsleiste
- 54: Winkelprofil

## Patentansprüche

1. Abdeckvorrichtung für eine Maschine, insbesondere für eine Werkzeugmaschine, mit
einer durch zumindest ein Abdeckelement (26, 28, 30; 46, 48) gebildeten Abdeckung (12), wobei der Abdeckung zumindest ein Element (14) zugeordnet ist, welches in einem seitlichen Bereich des zumindest einen Abdeckelements (26, 28, 30; 46, 48) angeordnet ist,
einem Antriebsmotor (18), der dazu ausgebildet und eingerichtet ist, die Abdeckung (12) von einer Geschlossenstellung in eine Offenstellung in einer Bewegungsrichtung zu bewegen, insbesondere wobei der Antriebsmotor (18) dazu ausgebildet und eingerichtet ist, die Abdeckung (12) von einer Geschlossenstellung in eine Offenstellung aufzurollen und/oder von einer Offenstellung in eine Geschlossenstellung abzurollen, und
zumindest einem elektrischen Bauteil (22), welches an der Abdeckung (12) angeordnet ist,
**dadurch gekennzeichnet, dass**
eine sich parallel zur Bewegungsrichtung erstreckende Aufnahme (32; 38) in dem zumindest einen Element (14) ausgebildet ist, in der ein Verbindungskabel (24) verläuft, welches das elektrische Bauteil (22) mittelbar oder unmittelbar mit einer Steuerungseinrichtung, einem Antriebsmotor (18) oder einer Stromquelle verbindet.

2. Abdeckvorrichtung für eine Maschine, insbesondere für eine Werkzeugmaschine, mit einer durch zumindest ein Abdeckelement (26, 28. 30; 46. 48) gebildeten Abdeckung (12), insbesondere wobei der Abdeckung zumindest ein Element (14) zugeordnet ist, welches in einem seitlichen Bereich des zumindest einen Abdeckelements (26, 28, 30; 46, 48) angeordnet ist, einem Antriebsmotor (18), der dazu ausgebildet und eingerichtet ist, die Abdeckung (12) von einer Geschlossenstellung in eine Offenstellung in einer Bewegungsrichtung zu bewegen, insbesondere wobei der Antriebsmotor (18) dazu ausgebildet und eingerichtet ist, die Abdeckung (12) von eine Geschlossenstellung in eine Offenstellung aufzurollen und/oder von einer Offenstellung in eine Geschlossenstellung abzurollen, und zumindest einem elektrischen Bauteil (22), welches an der Abdeckung (12) angeordnet ist, **dadurch gekennzeichnet, dass** eine sich parallel zur Bewegungsrichtung erstreckende Aufnahme (32; 38) in dem zumindest einen Abdeckelement (48) ausgebildet ist, in der ein Verbindungskabel (24) verlauft, welches das elektrische Bauteil (22) mittelbar oder unmittelbar mit einer Steuerungseinrichtung, einem Antriebsmotor (18) oder einer Stromquelle verbindet.

3. Abdeckvorrichtung nach Anspruch 1 oder 2, **dadurch gekennzeichnet, dass** das Element (14) ein Führungselement ist und zumindest eine Führungsschiene (16) vorgesehen ist, welche mit dem Führungselement (14) zusammenwirkt, um das zumindest eine Abdeckelement (26, 28, 30; 46, 48) in einer vordefinierten Bahn zu führen.

4. Abdeckvorrichtung nach Anspruch 1 bis 3, **dadurch gekennzeichnet, dass** das zumindest eine elektrische Bauteil als Sensor (22), insbesondere als Kollisionserkennungssensor, ausgebildet ist.

5. Abdeckvorrichtung nach zumindest einem der Ansprüche 1 bis 4, **dadurch gekennzeichnet, dass** die Abdeckung (12) mehrere verschwenkbar miteinander verbundene Abdeckelemente (26, 28, 30; 48) aufweist, insbesondere wobei die Abdeckelemente (26, 28, 30) als Hohlprofile ausgebildet sind.

6. Abdeckvorrichtung nach Anspruch 5, **dadurch gekennzeichnet, dass** die Abdeckelemente (26, 28, 30; 46, 48) aus einem Material hergestellt sind, welches Aluminium, Kunststoff und/oder Stahl umfasst.

7. Abdeckvorrichtung nach zumindest einem der vorherigen Ansprüche, **dadurch gekennzeichnet, dass** mehrere Führungselemente (14) vorgesehen sind, welche jeweils stirnseitig auf ein Abdeckelement (26, 28, 30; 46, 48) aufgesteckt sind.

8. Abdeckvorrichtung nach Anspruch 7, **dadurch gekennzeichnet, dass** mehrere der Führungselemente (14) jeweils eine Aussparung (32; 38) aufweisen, sodass die Aussparungen (32; 38) gemeinsam die sich parallel zur Führungsschiene (16) erstreckende Aufnahme bilden.

9. Abdeckvorrichtung nach Anspruch 7 oder 8, **dadurch gekennzeichnet, dass** die Führungselemente (14) lösbar an den Abdeckelementen (26, 28, 30; 46, 48) befestigt sind.

10. Abdeckvorrichtung nach zumindest einem der vorherigen Ansprüche, **dadurch gekennzeichnet, dass** die Aufnahme als umfangsseitig geschlossener Kanal oder als Durchgangsöffnung (38) ausgebildet ist.

11. Abdeckvorrichtung nach zumindest einem der vorherigen Ansprüche 1 bis 8, **dadurch gekennzeichnet , dass** die Aufnahme als Nut (32) ausgebildet ist, wobei die Nut (32) insbesondere eine Hinterschneidung (34) aufweist.

12. Abdeckvorrichtung nach zumindest einem der vorherigen Ansprüche, **dadurch gekennzeichnet , dass** das Verbindungskabel (24) eine Ummantelung aus Acrylnitril-Butadien-Kautschuk (NBR), Polyurethan (PU) oder Fluorkautschuk (FKM) aufweist.

13. Abdeckvorrichtung nach zumindest einem der vorherigen Ansprüche, **dadurch gekennzeichnet, dass** das Verbindungskabel (24) einen Durchmesser von mindestens 4 mm aufweist.

14. Abdeckvorrichtung nach zumindest einem der vorherigen Ansprüche, **dadurch gekennzeichnet , dass** eine Rolle vorgesehen ist, die dazu ausgebildet und eingerichtet ist, um die Abdeckung (12) auf die Rolle aufzurollen, wobei insbesondere die Rolle hohl ausgebildet ist und ein Teilabschnitt des Verbindungskabels (24) durch die Rolle hindurchgeführt ist.

15. Abdeckvorrichtung nach zumindest einem der vorherigen Ansprüche, **dadurch gekennzeichnet, dass** das elektrische Bauteil (22) über einen Schleifkontakt, insbesondere Rotationskontakt, mit der Steuerungseinrichtung, dem Antriebsmotor (18) oder der Stromquelle verbunden ist.

## Claims

1. A cover apparatus for a machine, in particular for a machine tool, comprising
a cover (12) formed by at least one cover element (26, 28, 30; 46, 48), wherein at least one element (14), which is arranged in a lateral region of the at least one cover element (26, 28, 30; 46, 48), is associated with the cover;
a drive motor (18) which is configured and adapted to move the cover (12) from a closed position into an open position in a direction of movement, in particular wherein the drive motor (18) is configured and adapted to roll up the cover (12) from a closed position into an open position and/or to roll it down from an open position into a closed position; and
at least one electrical component (22) which is arranged at the cover (12), **characterized in that**
a receiver (32; 38) extending in parallel with the direction of movement is formed in the at least one element (14), in which receiver (32; 38) a connection cable (24) extends that indirectly or directly connects the electrical component (22) to a control device, to a drive motor (18) or to a power source.

2. A cover apparatus for a machine, in particular for a machine tool, comprising
a cover (12) formed by at least one cover element (26, 28, 30; 46, 48), in particular wherein at least one element (14), which is arranged in a lateral region of the at least one cover element (26, 28, 30; 46, 48), is associated with the cover; a drive motor (18) which is configured and adapted to move the cover (12) from a closed position into an open position in a direction of movement, in particular wherein the drive motor (18) is configured and adapted to roll up the cover (12) from a closed position into an open position and/or to roll it down from an open position into a closed position; and at least one electrical component (22) which is arranged at the cover (12), **characterized in that** a receiver (32; 38) extending in parallel with the direction of movement is formed in the at least one cover element (48), in which receiver (32; 38) a connection cable (24) extends that indirectly or directly connects the electrical component (22) to a control device, to a drive motor (18) or to a power source.

3. A cover apparatus in accordance with claim 1 or claim 2,
**characterized in that**
the element (14) is a guide element and at least one guide rail (16) is provided that cooperates with the guide element (14) to guide the at least one cover element (26, 28, 30; 46, 48) in a predefined path.

4. A cover apparatus in accordance with claims 1 to 3,
**characterized in that**
the at least one electrical component is configured as a sensor (22), in particular as a collision recognition sensor.

5. A cover apparatus in accordance with at least one of the claims 1 to 4,
**characterized in that**
the cover (12) has a plurality of cover elements (26, 28, 30; 48) pivotably connected to one another, in particular with the cover elements (26, 28, 30) being formed as hollow sections.

6. A cover apparatus in accordance with claim 5,
**characterized in that**
the cover elements (26, 28, 30; 46, 48) are manufactured from a material that comprises aluminum, plastic and/or steel.

7. A cover apparatus in accordance with at least one of the preceding claims,
**characterized in that**
a plurality of guide elements (14) are provided which are each plugged onto a cover element (26, 28, 30; 46, 48) at the end face.

8. A cover apparatus in accordance with claim 7,
**characterized in that**
a plurality of the guide elements (14) each have a cutout (32; 38) so that the cutouts (32; 38) together form the receiver extending in parallel with the guide rail (16).

9. A cover apparatus in accordance with claim 7 or claim 8,
**characterized in that**
the guide elements (14) are releasably fastened to the cover elements (26, 28, 30; 46, 48).

10. A cover apparatus in accordance with at least one of the preceding claims,
**characterized in that**
the receiver is formed as a passage closed at the peripheral side or as a passage opening (38).

11. A cover apparatus in accordance with at least one of the preceding claims 1 to 8,
**characterized in that**
the receiver is formed as a groove (32), with the groove (32) in particular having an undercut (34).

12. A cover apparatus in accordance with at least one of the preceding claims,
**characterized in that**
the connection cable (24) has a jacket composed of acrylonitrile butadiene rubber (NBR), polyurethane (PU) or a fluoroelastomer (FKM).

13. A cover apparatus in accordance with at least one of the preceding claims,
**characterized in that**
the connection cable (24) has a diameter of at least 4 mm.

14. A cover apparatus in accordance with at least one of the preceding claims,
**characterized in that**
a roller is provided which is configured and adapted to roll up the cover (12) onto the roller, with the roller in particular being hollow and with a part section of the connection cable (24) being led through the roller.

15. A cover apparatus in accordance with at least one of the preceding claims,
**characterized in that**
the electrical component (22) is connected via a sliding contact, in particular a rotation contact, to the control device, to the drive motor (18) or to the power source.

## Revendications

1. Dispositif de recouvrement pour une machine, en particulier pour une machine-outil, comprenant
un capot (12) formé par au moins un élément de recouvrement (26, 28, 30 ; 46, 48), au moins un élément (14) étant associé au capot, lequel est disposé dans une zone latérale dudit au moins un élément de recouvrement (26, 28, 30 ; 46, 48),
un moteur d'entraînement (18) réalisé et conçu pour déplacer le capot (12) d'une position fermée à une position ouverte dans une direction de déplacement, en particulier le moteur d'entraînement (18) étant réalisé et conçu pour enrouler le capot (12) d'une position fermée à une position ouverte et/ou pour le dérouler d'une position ouverte à une position fermée, et
au moins un composant électrique (22) disposé sur le capot (12), **caractérisé en ce que**
un logement (32 ; 38) s'étendant parallèlement à la direction de déplacement est formé dans ledit au moins un élément (14), dans lequel s'étend un câble de connexion (24) qui relie directement ou indirectement le composant électrique (22) à un organe de commande, à un moteur d'entraînement (18) ou à une source de courant.

2. Dispositif de recouvrement pour une machine, en particulier pour une machine-outil, comprenant
un capot (12) formé par au moins un élément de recouvrement (26, 28, 30 ; 46, 48), en particulier au moins un élément (14) étant associé au capot, lequel est disposé dans une zone latérale dudit au moins un élément de recouvrement (26, 28, 30 ; 46, 48),
un moteur d'entraînement (18) réalisé et conçu pour déplacer le capot (12) d'une position fermée à une position ouverte dans une direction de déplacement, en particulier le moteur d'entraînement (18) étant réalisé et conçu pour enrouler le capot (12) d'une position fermée à une position ouverte et/ou pour le dérouler d'une position ouverte à une position fermée, et au moins un composant électrique (22) disposé sur le capot (12), **caractérisé en ce que**
un logement (32 ; 38) s'étendant parallèlement à la direction de déplacement est formé dans ledit au moins un élément de recouvrement (48), dans lequel s'étend un câble de connexion (24) qui relie directement ou indirectement le composant électrique (22) à un organe de commande, à un moteur d'entraînement (18) ou à une source de courant.

3. Dispositif de recouvrement selon la revendication 1 ou 2,
**caractérisé en ce que**
l'élément (14) est un élément de guidage, et il est prévu au moins un rail de guidage (16) qui coopère avec l'élément de guidage (14) pour guider ledit au moins un élément de recouvrement (26, 28, 30 ; 46, 48) selon une trajectoire prédéfinie.

4. Dispositif de recouvrement selon les revendications 1 à 3,
**caractérisé en ce que**
ledit au moins un composant électrique est réalisé sous forme de capteur (22), en particulier sous forme de capteur de détection de collision.

5. Dispositif de recouvrement selon l'une au moins des revendications 1 à 4,
**caractérisé en ce que**
le capot (12) présente plusieurs éléments de recouvrement (26, 28, 30 ; 48) reliés entre eux de manière à pouvoir pivoter, en particulier les éléments de recouvrement (26, 28, 30) étant réalisés sous forme de profilés creux.

6. Dispositif de recouvrement selon la revendication 5,
**caractérisé en ce que**
les éléments de recouvrement (26, 28, 30 ; 46, 48) sont réalisés en un matériau contenant de l'aluminium, de la matière plastique et/ou de l'acier.

7. Dispositif de recouvrement selon l'une au moins des revendications précédentes,
**caractérisé en ce que**
il est prévu plusieurs éléments de guidage (14) qui sont enfichés chacun du côté frontal sur un élément de recouvrement (26, 28, 30 ; 46, 48).

8. Dispositif de recouvrement selon la revendication 7,
**caractérisé en ce que**
plusieurs desdits éléments de guidage (14) présentent chacun un évidement (32 ; 38), de sorte que les évidements (32 ; 38) forment ensemble le logement s'étendant parallèlement au rail de guidage (16).

9. Dispositif de recouvrement selon la revendication 7 ou 8,
**caractérisé en ce que**
les éléments de guidage (14) sont fixés de manière amovible aux éléments de recouvrement (26, 28, 30 ; 46, 48).

10. Dispositif de recouvrement selon l'une au moins des revendications précédentes,
**caractérisé en ce que**
le logement est réalisé sous forme de canal fermé sur sa périphérie ou sous forme d'ouverture traversante (38).

11. Dispositif de recouvrement selon l'une au moins des revendications précédentes 1 à 8,
**caractérisé en ce que**
le logement est réalisé sous forme de rainure (32), la rainure (32) présentant en particulier une contre-dépouille (34).

12. Dispositif de recouvrement selon l'une au moins des revendications précédentes,
**caractérisé en ce que**
le câble de connexion (24) présente une gaine en caoutchouc acrylonitrile-butadiène (NBR), en polyuréthane (PU) ou en caoutchouc fluoré (FKM).

13. Dispositif de recouvrement selon l'une au moins des revendications précédentes,
**caractérisé en ce que**
le câble de connexion (24) présente un diamètre d'au moins 4 mm.

14. Dispositif de recouvrement selon l'une au moins des revendications précédentes,
**caractérisé en ce que**
il est prévu un rouleau qui est réalisé et conçu pour enrouler le capot (12) sur le rouleau, en particulier le rouleau étant creux et un tronçon partiel du câble de connexion (24) étant mené à travers le rouleau.

15. Dispositif de recouvrement selon l'une au moins des revendications précédentes,
**caractérisé en ce que**
le composant électrique (22) est relié à l'organe de commande, au moteur d'entraînement (18) ou à la source de courant par un contact glissant, en particulier par un contact rotatif.
